# EUROPEAN PATENT APPLICATION

(11) **EP 4 597 438 A1**
(43) Date of publication of application: **06.08.2025**
(21) Application number: 23869536.5
(22) Date of filing: 04.04.2023
(51) Int. Cl.: G06T 19/20, G06F 30/15, G06F 30/12, G06F 3/01

(54) **VEHICLE MODEL CREATION METHOD, VEHICLE MODEL CREATION SYSTEM, COMPUTER STORAGE MEDIUM, AND VEHICLE**

(30) Priority: 26.09.2022 CN 202211172500
(71) Applicant: BYD Company Limited, Shenzhen, Guangdong 518118 (CN)
(72) Inventor: YE, Jiangtao, Shenzhen, Guangdong 518118 (CN); RUAN, Zhou, Shenzhen, Guangdong 518118 (CN); MA, Jing, Shenzhen, Guangdong 518118 (CN); LIU, Ke, Shenzhen, Guangdong 518118 (CN); ZHANG, Jiande, Shenzhen, Guangdong 518118 (CN)
(74) Representative: Mathys & Squire
(86) International application number: PCT/CN2023/086188
(87) International publication number: WO 2024/066280

(57) **Abstract**

Disclosed in the present disclosure are a vehicle model creation method, a vehicle model creation system, a computer storage medium, and a vehicle. The vehicle model creation method comprises: receiving a start request of a vehicle model system; obtaining a current vehicle type and a dedicated hardware information of a vehicle; creating an initial 3D vehicle model according to the current vehicle type and a default supported vehicle model of the vehicle model system; and updating the initial 3D vehicle model according to the special hardware information, so as to create a final 3D vehicle model.

## Description

### CROSS-REFERENCE TO RELATED APPLICATIONS

The present disclosure claims priority to and benefits of Chinese Patent Application No. 202211172500.4, filed on September 26, 2022 and entitled "VEHICLE MODEL CREATION METHOD, VEHICLE MODEL CREATION SYSTEM, COMPUTER STORAGE MEDIUM, AND VEHICLE". The entire content of the above-referenced application is incorporated herein by reference.

### FIELD

The present disclosure relates to the field of vehicle technologies, and more specifically, to a method for creating a vehicle model, a vehicle model creation system, a computer storage medium, and a vehicle.

### BACKGROUND

In the related art, for a 3D vehicle model, a vehicle is connected, a vehicle bodyrelated parameter is obtained and fed back to an around view monitor (AVM) panoramic controller, an operation such as parsing is performed, and a parameter required by an AVM algorithm is obtained, so that the 3D vehicle model is displayed by using the parameter required by the AVM algorithm. However, the foregoing method is mainly to perform 3D vehicle model display to perform algorithm compatibility by using a self-learning panoramic camera, and the 3D vehicle model can only adapt to differences between different vehicle types in the algorithm. However, the 3D vehicle model cannot learn a status of a vehicle, and cannot achieve compatibility in appearance and functionality for vehicle types with significant appearance differences.

### SUMMARY

The present disclosure aims to resolve at least one of the technical problems existing in the related art. Therefore, an objective of the present disclosure is to provide a method for creating a vehicle model. According to the method, a function of dedicated hardware can be upgraded through self-learning, so that a created 3D vehicle model is more consistent with an actual state of an actual vehicle, and development costs and update costs can be reduced.

A second objective of the present disclosure is to provide a vehicle model creation system.

A third objective of the present disclosure is to provide a computer storage medium.

A fourth objective of the present disclosure is to provide a vehicle.

To resolve the foregoing problem, according to a first aspect, an embodiment of the present disclosure provides a method for creating a vehicle model. The method includes: A start request of a vehicle model system is received; a current vehicle type and dedicated hardware information of a vehicle are obtained; an initial 3D vehicle model is created according to the current vehicle type and a default supported vehicle type of the vehicle model system; and the initial 3D vehicle model is updated according to the dedicated hardware information, to create a final 3D vehicle model.

According to the method for creating a vehicle model in this embodiment of the present disclosure, when a 3D vehicle model is created on a vehicle model control interface, the initial 3D vehicle model is created by using the current vehicle type of the vehicle and the default supported vehicle type of the vehicle model system. In this way, different vehicle models are displayed for different vehicle types, thereby improving adaptability to different vehicle types and reducing development costs. In addition, the dedicated hardware information of the vehicle is further actively obtained, and general-purpose hardware in the initial 3D vehicle model is automatically updated by using the dedicated hardware information, to form the final 3D vehicle model. Therefore, a function of dedicated hardware is upgraded through self-learning, and hardware that is in an actual vehicle and that is inconsistent with hardware of the default supported vehicle type can also be automatically and synchronously displayed in the final 3D vehicle model without being upgraded through an OTA or being upgraded by a 4S shop, so that the created final 3D vehicle model is more consistent with an actual state of the actual vehicle, and upgrade or update costs are reduced.

In some embodiments, a default 3D vehicle model corresponding to the default supported vehicle type is pre-stored in the vehicle model system, and that the initial 3D vehicle model is created according to the current vehicle type and the default supported vehicle type of the vehicle model system includes: When it is determined that the current vehicle type belongs to the default supported vehicle type, a default 3D vehicle model corresponding to the current vehicle type is configured as the initial 3D vehicle model; and when it is determined that the current vehicle type does not belong to the default supported vehicle type, a default supported vehicle type with a highest matching degree with the current vehicle type is determined from the default supported vehicle type, and a default 3D vehicle model corresponding to the default supported vehicle type with the highest matching degree is configured as the initial 3D vehicle model.

In some embodiments, the dedicated hardware information includes dedicated configuration information and dedicated function control information, and that the initial 3D vehicle model is updated according to the dedicated hardware information includes: A dedicated hardware sub-model is determined according to the dedicated configuration information; general-purpose hardware that corresponds to the dedicated hardware and that is in the initial 3D vehicle model is updated to the dedicated hardware sub-model, and the dedicated function control information is synchronously updated into the initial 3D vehicle model; and general-purpose hardware in the initial 3D vehicle model other than the general-purpose hardware corresponding to the dedicated hardware is controlled to maintain own configuration information and own function control information.

In some embodiments, the dedicated configuration information includes at least accessory information, accessory connection information, and arrangement position information of the dedicated hardware, and the dedicated function control information includes a basic function control parameter and a value-added function control parameter of the dedicated hardware.

In some embodiments, the method for creating a vehicle model further includes: It is determined whether the dedicated function control information or own function control information is in an available state; if the dedicated function control information or own function control information is in the available state, hotspot display on a dedicated hardware hotspot or a general-purpose hardware hotspot in the final 3D vehicle model is controlled; and if the dedicated function control information or own function control information is not in the available state, hotspot hiding on the dedicated hardware hotspot or the general-purpose hardware hotspot in the final 3D vehicle model is controlled.

In some embodiments, after hotspot display is performed on the dedicated hardware hotspot or the general-purpose hardware hotspot, the method for creating a vehicle model further includes: A first control instruction of the dedicated hardware hotspot or the general-purpose hardware hotspot is received; and in response to the first control instruction, an operating status of the dedicated hardware or the general-purpose hardware is changed according to the dedicated function control information or own function control information.

In some embodiments, the method for creating a vehicle model further includes: A hotspot interaction form between the dedicated hardware hotspot and the dedicated hardware is controlled according to a vehicle control interaction effect of the dedicated hardware; and a hotspot interaction form between the general-purpose hardware hotspot and the general-purpose hardware is controlled according to a vehicle control interaction effect of the general-purpose hardware.

In some embodiments, the hotspot interaction form includes at least one of a hotspot following form, a hotspot rotation form, and a hotspot fixing form.

In some embodiments, the method for creating a vehicle model further includes: An enabling instruction of a vehicle model DIY function in the vehicle model system is received, and a vehicle model DIY editing interface is entered; a DIY editing element of the vehicle model DIY function is obtained, and the DIY editing element is loaded into the vehicle model DIY editing interface; and the final 3D vehicle model is adjusted in a customized manner according to the DIY editing element.

In some embodiments, the DIY editing element includes at least a vehicle body decoration editing element and a vehicle hardware editing element, and that the final 3D vehicle model is adjusted in the customized manner according to the DIY editing element includes: A vehicle body of the final 3D vehicle model is adjusted in a customized manner according to the vehicle body decoration editing element; and/or the dedicated hardware or the general-purpose hardware in the final 3D vehicle model is adjusted in a customized according to the vehicle hardware editing element.

In some embodiments, after the start request of the vehicle model system is received, the method for creating a vehicle model further includes: A vehicle model control interface is entered, and the final 3D vehicle model is displayed on the vehicle model control interface.

In some embodiments, that the current vehicle type of the vehicle is obtained includes: The current vehicle type corresponding to the vehicle is obtained according to a vehicle type ID value corresponding to the vehicle.

According to a second aspect, an embodiment of the present disclosure provides a vehicle model creation system, including at least one processor; and a memory communicatively connected to the at least one processor. The memory stores a computer program executable by the at least one processor, and when the at least one processor executes the computer program, the method for creating a vehicle model according to the foregoing embodiment is implemented.

According to the vehicle model creation system in this embodiment of the present disclosure, a function of dedicated hardware can be upgraded through self-learning, so that a created 3D vehicle model is more consistent with an actual state of an actual vehicle, and development costs and update costs can be reduced.

According to a third aspect, an embodiment of the present disclosure provides a computer storage medium. The computer storage medium stores a computer program. When the computer program is executed by a processor, the method for creating a vehicle model according to the foregoing embodiment is implemented.

According to a fourth aspect, an embodiment of the present disclosure provides a vehicle, including the vehicle model creation system described in the foregoing embodiment.

According to the vehicle in this embodiment of the present disclosure, a function of dedicated hardware can be upgraded through self-learning, so that a created 3D vehicle model is more consistent with an actual state of an actual vehicle, and development costs and update costs can be reduced.

The additional aspects and advantages of the present disclosure will be provided in the following descriptions, some of which will become apparent from the following descriptions or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where:
FIG. 1 is a flowchart of a method for creating a vehicle model according to an embodiment of the present disclosure;
FIG. 2 is a structural block diagram of a method for creating a vehicle model according to another embodiment of the present disclosure;
FIG. 3 is a structural block diagram of a vehicle model creation system according to an embodiment of the present disclosure; and
FIG. 4 is a structural block diagram of a vehicle according to an embodiment of the present disclosure.

In the drawings:
Vehicle 100; vehicle model creation system 10;
processor 1; and memory 2.

### DETAILED DESCRIPTION

The embodiments described with reference to the accompanying drawings are exemplary, and the following describes the embodiments of the present disclosure in detail.

To resolve the foregoing problem, according to a first aspect, an embodiment of the present disclosure provides a method for creating a vehicle model. According to the method, a function of dedicated hardware can be upgraded through self-learning, so that a created 3D vehicle model is more consistent with an actual state of an actual vehicle, and development costs and update costs can be reduced.

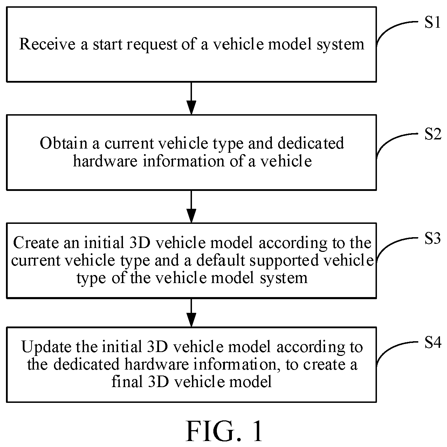

The following describes a method for creating a vehicle model according to an embodiment of the present disclosure with reference to FIG. 1. The method includes step S1 to step S4.

Step S1: A start request of a vehicle model system is received.

Specifically, a user may send the start request of the vehicle model system to a vehicle in an operation manner such as a soft function key of the vehicle model system, a voice, or a gesture, and the vehicle receives the start request of the vehicle model system in the vehicle, to start the vehicle model system.

Step S2: A current vehicle type and dedicated hardware information of the vehicle are obtained.

The dedicated hardware information may be understood as information about dedicated hardware that is in the vehicle and that is different from a mainstream configuration, that is, general-purpose hardware, in the vehicle leaving a factory. In other words, when the vehicle leaves the factory, a manufacturer performs a general-purpose configuration on each hardware as required, so as to use the general-purpose configuration as a default mainstream configuration in the vehicle. However, it may be understood that, after the vehicle leaves the factory, some hardware in the vehicle is changed or upgraded with use of the user. Therefore, information about hardware that is in the vehicle and that is different from the mainstream configuration in the vehicle leaving the factory is used as the dedicated hardware information.

In this embodiment, because different vehicle types correspond to different vehicle type ID values, the current vehicle type corresponding to the vehicle may be obtained by using a vehicle type ID value corresponding to the vehicle. For example, a current vehicle type ID value may be fed back to the vehicle model system through an interface for obtaining the current vehicle type ID value in the vehicle, so that the current vehicle type corresponding to the vehicle is determined, thereby implementing self-learning of the current vehicle type of the entire vehicle. The vehicle type ID value may be in a form of a message, which is not limited. In addition, the dedicated hardware information corresponding to the vehicle, for example, a panoramic sunroof, a small sunroof, a front sunroof, or a rear sunroof, may be fed back to the vehicle model system through a hardware configuration self-learning interface. It may be understood that interfaces of dedicated hardware information of different dedicated hardware are also different.

Step S3: An initial 3D vehicle model is created according to the current vehicle type and a default supported vehicle type of the vehicle model system.

Specifically, the vehicle model system may load different 3D vehicle model resources by using the vehicle type ID value. To be specific, in the vehicle model system, a default supported vehicle type (for example, only one vehicle type may be supported by default, or a plurality of vehicle types such as a compact vehicle type, a middle-sized vehicle type, an SUV vehicle type, a CDV vehicle type, or an MPV vehicle type may be supported by default) is preset based on an actual requirement, and different function support conditions are loaded. Therefore, the vehicle model system compares the obtained current vehicle type with the default supported vehicle type of the vehicle model system, to determine whether the current vehicle type of the vehicle belongs to the default supported vehicle type of the vehicle model system, and then loads a corresponding vehicle model resource through a comparison result. In addition, a corresponding supported function is synchronized for the vehicle model resource, that is, a supported mainstream configuration is also added to the vehicle model resource, so as to create the initial 3D vehicle model, so that an effect of displaying different vehicle models for different vehicle types is achieved, adaptability to different vehicle types is improved, and development costs are reduced.

Step S4: The initial 3D vehicle model is updated according to the dedicated hardware information, to create a final 3D vehicle model.

In an embodiment, after the vehicle leaves the factory, with use of a user, some hardware in the vehicle is changed or upgraded due to damage or another condition. In this case, some hardware in the actual vehicle is inconsistent with general-purpose hardware in a 3D vehicle model corresponding to a default supported vehicle type. As a result, the 3D vehicle model displayed in the vehicle model system cannot be compatible with an appearance and a function of the actual vehicle. For example, a same vehicle type has different high, medium, and low configurations, resulting in different displayed configurations of general-purpose hardware in the initial 3D model. For example, for a same vehicle type, an ordinary sunroof is arranged for a low-configuration vehicle, and a panoramic sunroof is arranged for a high-configuration vehicle. If the default supported vehicle type of the vehicle model system is only a vehicle type of the low-configuration vehicle, for the high-configuration vehicle, only a 3D vehicle model with an ordinary sunroof may be displayed when the 3D vehicle model is created. In other words, there is no panoramic sunroof in the vehicle model, an actual state of the high-configuration vehicle cannot be reflected, and the vehicle model cannot be compatible with an appearance and a function of the high-configuration vehicle. In this case, a 3D vehicle model consistent with the high-configuration vehicle can be displayed only through an over-the-air technology (Over-The-Air technology, OTA) or 4S upgrade, but upgrade or update costs are increased in this way. Therefore, to resolve the foregoing problem, in the present disclosure, the dedicated hardware information of the vehicle is actively obtained when the initial 3D vehicle model is created by using the current vehicle type, and the general-purpose hardware in the initial 3D vehicle model is automatically updated by using the dedicated hardware information to form the final 3D vehicle model. For example, the panoramic sunroof arranged for the high-configuration vehicle is dedicated hardware information of the vehicle. Hardware information of the ordinary sunroof in the initial 3D model corresponding to the low-configuration vehicle type is updated to the dedicated hardware information of the panoramic sunroof according to the dedicated hardware information corresponding to the panoramic sunroof, so that a function of dedicated hardware is upgraded through self-learning. In this way, hardware that is in an actual vehicle and that is inconsistent with hardware of the default supported vehicle type can also be automatically and synchronously displayed in the final 3D vehicle model without being upgraded through the OTA or being upgraded by a 4S shop, so that the created final 3D vehicle model is more consistent with the actual state of the actual vehicle, and the upgrade or update costs are reduced.

Specifically, when a configuration of hardware in the vehicle needs to be upgraded or the hardware needs to be replaced, the vehicle model system actively obtains the dedicated hardware information of the vehicle to self-learn configurations of different hardware in the actual vehicle. For example, corresponding dedicated hardware information or a difference such as a hybrid electric type, a pure electric type, a fuel type, or a power type is learned by using configured self-learning interfaces corresponding to different hardware, to perform self-learning and adaptation on different hardware. In other words, the general-purpose hardware in the initial 3D vehicle model is correspondingly updated by using the dedicated hardware information, to create the final 3D vehicle model on a vehicle model control interface. Therefore, in the present disclosure, the corresponding general-purpose hardware in the initial 3D vehicle model is replaced with the dedicated hardware information learned through a self-learning function, and the dedicated hardware information is displayed for a user to view. In this way, OTA upgrade does not need to be performed on the vehicle, and the user does not need to drive the vehicle to the 4S shop to upgrade the vehicle model system, and learning and display of a hardware function can be automatically completed, thereby greatly reducing the upgrade or update costs.

According to the method for creating a vehicle model in this embodiment of the present disclosure, when a 3D vehicle model is created on a vehicle model control interface, the initial 3D vehicle model is created by using the current vehicle type of the vehicle and the default supported vehicle type of the vehicle model system. In this way, different vehicle models are displayed for different vehicle types, thereby improving adaptability to different vehicle types and reducing development costs. In addition, the dedicated hardware information of the vehicle is actively obtained, and the general-purpose hardware in the initial 3D vehicle model is automatically updated by using the dedicated hardware information, to form the final 3D vehicle model, so that a function of dedicated hardware is upgraded through self-learning. Therefore, without being upgraded through the OTA or being upgraded by the 4S shop, hardware that is in an actual vehicle and that is not consistent with hardware in the default supported vehicle type can also be automatically and synchronously displayed in the final 3D vehicle model, so that the created final 3D vehicle model is more consistent with an actual state of the actual vehicle, and upgrade or update costs are reduced.

In some embodiments, a default 3D vehicle model corresponding to the default supported vehicle type is pre-stored in the vehicle model system. In other words, a consistent default 3D vehicle model is correspondingly set for each default supported vehicle type. For example, if there is an SUV vehicle type in the default supported vehicle type, an SUV 3D vehicle model of the SUV vehicle type is pre-stored in the vehicle model system. Based on this, if it is determined that the current vehicle type belongs to the default supported vehicle type, a default 3D vehicle model corresponding to the current vehicle type is configured as the initial 3D vehicle model. Alternatively, if it is determined that the current vehicle type does not belong to the default supported vehicle type, a default supported vehicle type with a highest matching degree with the current vehicle type is determined from the default supported vehicle type, and any default 3D vehicle model corresponding to the default supported vehicle type with the highest matching degree is configured as the initial 3D vehicle model.

Specifically, after the current vehicle type of the vehicle is obtained, the vehicle model system determines whether the current vehicle type is one of default supported vehicle types. If the vehicle model system determines that the current vehicle type belongs to a default supported vehicle type, it indicates that a vehicle model resource applicable to the current vehicle type exists in the default 3D vehicle model pre-stored in the vehicle model system, and the default 3D vehicle model corresponding to the current vehicle type is configured as the initial 3D vehicle model. UI rendering is performed on the initial 3D vehicle model, and the initial 3D vehicle model is displayed on the vehicle model control interface. The initial 3D vehicle model supports some functions of the general-purpose hardware, and a special function different from that of another vehicle type is also added. For example, in the vehicle model system, default supported vehicle types are respectively a compact vehicle type, a middle-sized vehicle type, an SUV vehicle type, a CDV vehicle type, and an MPV vehicle type. If it is determined that the current vehicle type of the vehicle is the SUV vehicle type, an SUV 3D vehicle model corresponding to the SUV vehicle type is directly invoked as the initial 3D vehicle model.

Alternatively, when the vehicle model system determines that the current vehicle type does not belong to the default supported vehicle types, it indicates that no vehicle model resource applicable to the current vehicle type exists in the default 3D vehicle model pre-stored in the vehicle model system. In this case, in the present disclosure, the default supported vehicle type with the highest matching degree with the current vehicle type is determined from the default supported vehicle types. In other words, among all default supported vehicle types, a vehicle type in which a brand, an appearance, a size, a vehicle carriage, a vehicle door, and a hardware configuration are closest to these of the vehicle of the current vehicle type is configured as the default supported vehicle type with the highest matching degree, and the default 3D vehicle model corresponding to the default supported vehicle type with the highest matching degree is configured as the initial 3D vehicle model. UI rendering is performed on the initial 3D vehicle model, and the initial 3D vehicle model is displayed on the vehicle model control interface. The initial 3D vehicle model supports only some general functions. For example, in the vehicle model system, default supported vehicle types are respectively a compact vehicle type, a middle-sized vehicle type, a CDV vehicle type, and an MPV vehicle type. If it is determined that the current vehicle type of the vehicle is an SUV vehicle type, the vehicle type is not one of the default supported vehicle types. Therefore, the MPV vehicle type with a highest matching degree with the current vehicle type may be configured as the default supported vehicle type with the highest matching degree, and a default 3D vehicle model corresponding to the MPV vehicle type is configured as the initial 3D vehicle model.

In some embodiments, the dedicated hardware information includes dedicated configuration information and dedicated function control information. That the initial 3D vehicle model is updated according to the dedicated hardware information includes: A dedicated hardware sub-model is determined according to the dedicated configuration information; general-purpose hardware that corresponds to the dedicated hardware and that is in the initial 3D vehicle model is updated to the dedicated hardware sub-model, and the dedicated function control information is synchronously updated into the initial 3D vehicle model; and general-purpose hardware in the initial 3D vehicle model other than the general-purpose hardware corresponding to the dedicated hardware is controlled to maintain own configuration information and own function control information.

The dedicated configuration information may be understood as information indicating that the dedicated hardware can complete an operation of the dedicated hardware and implement a function of the dedicated hardware. For example, the dedicated configuration information may be accessory information, accessory connection information, and arrangement position information of the dedicated hardware. The dedicated function control information may be understood as information indicating that a control policy for controlling running of the dedicated hardware enables the dedicated hardware to perform a related function. The dedicated function control information includes a basic function control parameter and a value-added function control parameter of the dedicated hardware. Specifically, because the dedicated hardware has a basic function, that is, a start function or a close function, the dedicated function control information includes basic function control parameters such as a start control parameter and a close control parameter of the dedicated hardware. In addition, in addition to the basic function, some dedicated hardware has another value-added function. For example, vehicle window glass may have a glass-color changing function, and a back door may have a high memory function, but the back door does not need to have the glass-color changing function. Therefore, for value-added functions of different dedicated hardware, dedicated function control information needs to include value-added function control parameters of the dedicated hardware.

Specifically, different dedicated hardware corresponds to different dedicated configuration information, and different dedicated configuration information corresponds to different dedicated hardware sub-models. Therefore, after a vehicle-mounted multimedia is started, the vehicle model system feeds back, through a configuration self-learning interface corresponding to the dedicated hardware, the dedicated configuration information corresponding to the dedicated hardware, and determines the dedicated hardware sub-model by using the dedicated configuration information, so as to update the general-purpose hardware that is in the initial 3D vehicle model and that is at a position corresponding to the dedicated hardware to the dedicated hardware sub-model. In addition, to implement normal control of the dedicated hardware, the dedicated function control information is synchronously updated into the initial 3D vehicle model, so that a function of the dedicated hardware is upgraded through self-learning. Therefore, hardware that is in the actual vehicle and that is not consistent with hardware of the default supported vehicle type can also be automatically and synchronously displayed in the final 3D vehicle model without being upgraded through the OTA or being upgraded by the 4S shop, so that the created final 3D vehicle model is more consistent with an actual state of the actual vehicle, and upgrade or update costs are reduced. In addition, when the vehicle model system does not learn configuration information corresponding to other hardware through the self-learning function, a default configuration function and interaction of the general-purpose hardware in the initial 3D vehicle model are maintained. In other words, the general-purpose hardware in the initial 3D vehicle model other than the general-purpose hardware corresponding to the dedicated hardware is controlled to maintain own configuration information and own function control information.

For example, a mainstream configuration, that is, general-purpose hardware, in each vehicle type is fixed. For example, for a high-configuration sport utility vehicle (SUV) type that supports an all-electric sunroof, the all-electric sunroof is configured as general-purpose hardware for a default 3D vehicle model that corresponds to the SUV vehicle type and that is in the vehicle model system, and when being displayed, an initial 3D vehicle model created based on the SUV vehicle type is configured as a sub-model of a panoramic electric sunroof. However, a sunroof of a vehicle may alternatively be a panoramic sunroof, a small sunroof, a front sunroof, a rear sunroof, or the like that does not support electronic control. Therefore, when a panoramic electric sunroof of an actual vehicle is replaced with the small sunroof due to damage or another condition, after being started, the vehicle model system obtains dedicated configuration information of the small sunroof instead of configuration information of the panoramic electric sunroof through the self-learning function. In this case, the initial 3D vehicle model is loaded and updated to a sub-model of the small sunroof at a position of the default panoramic electric sunroof, to replace an original sunroof model. In addition, the vehicle model system actively loads a configuration of a vehicle control interface corresponding to the small sunroof, to synchronously update dedicated function control information of the small sunroof into the initial 3D vehicle model, so that interaction between a user and the sunroof is updated to interaction between the user and the small sunroof, thereby implementing self-learning of a function and interaction of the small sunroof. Certainly, other hardware in the vehicle may also be updated through self-learning in the foregoing manner, for example, the back door is replaced with an electric back door or a back door that supports only unlocking. Details are not described herein.

In some embodiments, the vehicle model control interface supports loading of a sub-model of customized dedicated hardware.

In some embodiments, in the present disclosure, it is further determined whether the dedicated function control information or own function control information is in an available state. If the dedicated function control information or own function control information is in the available state, hotspot display on a dedicated hardware hotspot or a general-purpose hardware hotspot in the final 3D vehicle model is controlled; and if the dedicated function control information or own function control information is not in the available state, hotspot hiding on the dedicated hardware hotspot or the general-purpose hardware hotspot in the final 3D vehicle model is controlled. Therefore, a user can intuitively determine a usage status of hardware according to display or hiding of a hardware hotspot, so that display of the hardware hotspot is more intelligent.

Specifically, the vehicle model system may obtain the dedicated hardware information through the self-learning function. However, when some abnormal conditions such as thermal protection, hardware failure, hardware damage, message exception, and exception in an upper-layer system interface occur in the dedicated hardware, the vehicle model system cannot learn the dedicated function control information through self-learning. As a result, dedicated function control fed back through a function enabling interface configured for the dedicated hardware is not available. Therefore, if the dedicated function control information or own function control information is in the available state, it indicates that the self-learning function of the vehicle model system is normal, and the dedicated hardware or the general-purpose hardware can be normally controlled. Therefore, hotspot display on the dedicated hardware hotspot or the general-purpose hardware hotspot is controlled, that is, the dedicated hardware hotspot or the general-purpose hardware hotspot is displayed at a corresponding position on the final 3D vehicle model, for example, a corresponding hardware hotspot is displayed at a position of a vehicle window. If the dedicated function control information or own function control information is not in the available state, it indicates that learning performed through the self-learning function of the vehicle model system fails, and the dedicated hardware or the general-purpose hardware has a fault and cannot be normally controlled. Therefore, hotspot hiding on the dedicated hardware hotspot or the general-purpose hardware hotspot is controlled, that is, the corresponding dedicated hardware hotspot or general-purpose hardware hotspot is not displayed at the corresponding position on the final 3D vehicle model. Therefore, display or hiding of the hardware hotspot is associated with a self-learning condition and an enabling condition of the vehicle, to distinguish between enabling conditions of corresponding hardware functions, so as to intuitively notify the user whether a function of current hardware is abnormal, and another interface may also be used to assist in reminding the user when necessary.

In an embodiment, without affecting another function operation of the vehicle, the hardware hotspot may be displayed in a suspended manner at a landmark position of corresponding hardware. A form of a hotspot, for example, a shape, a size, or a color of the hotspot may be customized by a user, which is not limited. In addition, a palette hotspot may be further set, and a color setting of a vehicle body may appear when the palette hotspot is tapped during interaction. In other words, a color of the vehicle body may be correspondingly changed by tapping the palette hotspot. In addition, color configuration may alternatively be delivered to the vehicle model system through a remote control module of the vehicle, to update a color list of the vehicle model system.

In some embodiments, after hotspot display is performed on the dedicated hardware hotspot or the general-purpose hardware hotspot, the user may tap the dedicated hardware hotspot or the general-purpose hardware hotspot in the final 3D vehicle model to trigger a first control instruction. After receiving the first control instruction of the dedicated hardware hotspot or the general hardware hotspot, the vehicle model system changes, in response to the first control instruction, an operating status of the dedicated hardware or the general-purpose hardware according to the dedicated function control information or own function control information. For example, the user may correspondingly adjust an operating status of dedicated hardware or general-purpose hardware such as an ambient light, an air conditioner, a seat, a vehicle door, a vehicle light, or a trunk through the hardware hotspot displayed on the final 3D vehicle model, so that the user can conveniently control the hardware in the vehicle.

For example, assuming that a back door of the vehicle is general-purpose hardware, a corresponding back door hotspot is displayed at the back door of the final 3D vehicle model. When an operating status of the back door is a closed state, the user taps the back door hotspot to generate a first control instruction of the back door. Further, in response to the first control instruction, the vehicle model system controls, according to own function control information corresponding to the back door, the back door to perform an operation of "opening the back door", so as to change the operating status of the back door from the closed state to an open state. In addition, in a process of opening the back door, the user may further tap the back door hotspot again, to control, by using the same control process, the back door to perform an operation of "pausing opening of the back door". Similarly, when the operating status of the back door is the open state, the user may also tap the back door hotspot to control the back door to perform the operation of "closing the back door" by using the same control process. Therefore, the operating status of the back door is controlled by tapping the back door hotspot, so that the user can conveniently control the hardware in the vehicle.

In some embodiments, a hotspot interaction form between the dedicated hardware hotspot and the dedicated hardware is controlled according to a vehicle control interaction effect of the dedicated hardware; and a hotspot interaction form between the general-purpose hardware hotspot and the general-purpose hardware is controlled according to a vehicle control interaction effect of the general-purpose hardware. In other words, different hardware has different vehicle control interaction effects, and the different vehicle control interaction effects each correspond to one hotspot interaction form. Based on the vehicle control interaction effect of the dedicated hardware or the general-purpose hardware, when the dedicated hardware or the general-purpose hardware performs an action, the dedicated hardware hotspot or the general-purpose hardware hotspot may present a corresponding hotspot interaction form as the operating status of the dedicated hardware or the general-purpose hardware changes. Therefore, a vehicle model viewing effect for the user can be improved, and a problem of mistaken control of the hardware hotspot can be avoided.

The vehicle control interaction effect may be understood as an interaction effect between the dedicated hardware or the general-purpose hardware and other hardware when the dedicated hardware or the general-purpose hardware is controlled to perform a function according to the first control instruction. Vehicle door glass is used as an example. When the vehicle door glass is controlled to perform a lowering function according to a first control instruction for opening the vehicle door glass, an interaction effect between the vehicle door glass and the vehicle door is that the vehicle door glass is gradually lowered and falls into the vehicle door. The hotspot interaction form may be understood as a performance form in which the dedicated hardware hotspot or the general-purpose hardware hotspot acts synchronously with the vehicle control interaction effect of the dedicated hardware or the general-purpose hardware. The hotspot interaction form includes at least one of a hotspot following form, a hotspot rotation form, and a hotspot fixing form. The hotspot following form may be understood as a form in which a hardware hotspot performs a same operation synchronously with hardware when the hardware performs an action. For example, when the back door hotspot performs an open action, the back door opens and rises. In this case, the back door hotspot synchronously follows the back door to perform a rising action. The hotspot rotation form may be understood as a form in which the hardware hotspot synchronously performs clockwise rotation or counterclockwise rotation when the hardware performs an action. The hotspot fixing form may be understood as that the hardware hotspot remains in an original form at a current position when the hardware performs an action, that is, the hardware hotspot does not perform any action. In addition, the hotspot interaction form may be preset for the vehicle control interaction effect of the dedicated hardware or the general-purpose hardware in advance, or may be customized by a user. This is not limited herein.

For example, when the hardware is the back door, a vehicle control interaction effect for the back door when the back door is opened is that the back door gradually rises. Therefore, a hotspot interaction form of a hardware hotspot corresponding to the back door may be set to the hotspot following form. In other words, the hardware hotspot gradually rises as the back door is opened and rises, to an upper side of the back door, and is not displayed only at a fixed position. For a vehicle window, when vehicle window glass is completely opened, if a hotspot interaction form of a hardware hotspot corresponding to the vehicle window glass is set to the hotspot following form, that is, the hardware hotspot moves as the vehicle window glass rises or falls, the hardware hotspot in the vehicle window glass is displayed above the vehicle door after the vehicle window glass completely falls. Consequently, a driver makes an error in determining interaction between hardware hotspots, and mistakenly considers the vehicle window glass hotspot as a vehicle door hotspot. Therefore, the hotspot fixing form may be set for the vehicle window glass, that is, the vehicle window hotspot is fixedly displayed at a middle hanging position of a frame of the vehicle window, and does not follow and is not displayed with a rising or falling percentage of the vehicle window. Therefore, when a hotspot interaction form between a hardware hotspot and hardware is controlled, a vehicle control interaction effect of the hardware needs to be considered, to avoid a problem of mistaken control of the hardware hotspot.

In some embodiments, when intending to modify an appearance of the vehicle, the user may view an effect of a modified vehicle in advance by using a vehicle model DIY function. To be specific, the user sends an enabling instruction of the vehicle model DIY function to the vehicle in an operation manner such as a soft function key of the vehicle model system, a voice, or a gesture. The vehicle receives the enabling instruction of the vehicle model DIY function of the vehicle model system to enable the vehicle model DIY function, controls a vehicle-mounted multimedia screen to enter a vehicle model DIY editing interface, obtains a DIY editing element of the vehicle model DIY function, and loads the DIY editing element into the vehicle model DIY editing interface. Therefore, the user can adjust the final 3D vehicle model in a customized manner with reference to various DIY editing elements displayed on the vehicle model DIY editing interface, that is, the user can adjust vehicle paint, the color of the vehicle body, a tire style, and the like in a customized manner for presentation to the user. Therefore, the vehicle model system in the present disclosure supports the DIY function. The final 3D vehicle model is displayed in a customized manner by using the vehicle model DIY function, for example, replacing the vehicle paint, modifying the color of the vehicle body, and modifying the tire style. In this way, the user can view an effect of a modified actual vehicle in advance before modifying the vehicle, so that the user can more intuitively learn a modified finished product, and an operation is simple.

For obtaining the DIY editing element of the vehicle model DIY function, a DIY editing element that is preset and stored in the vehicle model system and that may be applied to the vehicle may be obtained, or a DIY editing element uploaded to the vehicle model system by the user or a DIY editing element uploaded to the vehicle model system by another user may be obtained. For example, a resource of a vehicle model or an expanded hardware sub-model that is uploaded by the user is updated. Alternatively, the user may share a sticker picture to the cloud, so that when using the vehicle model DIY function, another user downloads the sticker picture to the vehicle model system from the cloud for use, and another user synchronizes the sticker picture to a vehicle of another user to view an effect. In this way, stickiness of the user can be effectively improved in a manner of allowing the user to perform sharing.

In some embodiments, the DIY editing element includes at least a vehicle body decoration editing element and a vehicle hardware editing element. The vehicle body decoration editing element may be an editing element such as a color of a vehicle body color, an exterior sticker of the vehicle body, or personalized decoration inside the vehicle body. This is not limited herein. The vehicle hardware editing element may be a sub-model element for various editable hardware in the vehicle, for example, a sub-model of different types of vehicle windows, a sub-model of different types of hubs, or a sub-model of different types of back doors. This is not limited herein.

Further, when the final 3D vehicle model is adjusted in a customized manner according to the DIY editing element, a vehicle body of the final 3D vehicle model is adjusted in a customized manner according to the vehicle body decoration editing element; and/or the dedicated hardware or the general-purpose hardware in the final 3D vehicle model is adjusted in a customized manner according to the vehicle hardware editing element. Therefore, the user customizes the final 3D vehicle model by using various DIY editing elements, so that the user can learn and view an effect of the modified actual vehicle in advance, to improve user experience.

For example, when the user wants to replace vehicle paint, the vehicle body DIY function may be enabled, and the user taps a desired color of the vehicle body in the vehicle body decoration editing element displayed on the vehicle body DIY interface, to re-customize a color of the vehicle paint of the final 3D vehicle model, so as to view in advance an effect of replacing the color of the vehicle body. Alternatively, when the user wants to stick a sticker on the vehicle, the vehicle model DIY function may be enabled, and the user taps "uploading a sticker picture" on the vehicle model DIY interface and saves the sticker picture as a vehicle body decoration editing element, and adds the sticker picture to the final 3D vehicle model. In addition, the user may enter an editing mode of the sticker picture to manually adjust a size or a position of the sticker picture, that is, to perform operations such as zoom-in, zoom-out, and move on the sticker picture, so that the sticker picture is updated to the final 3D vehicle model for dynamic presentation, thereby helping the user view in advance an effect of sticking the sticker on the vehicle. Alternatively, when the user wants to replace a hub of a tire, the vehicle model DIY function may be enabled, and the user uploads a sub-model of the hub to the vehicle body decoration editing element displayed on the vehicle model DIY interface, to update the sub-model of the hub to the final 3D vehicle model, so as to view in advance an effect of replacing the hub of the vehicle.

In some embodiments, in the present disclosure, after the start request of the vehicle model system is received, the method further includes: The vehicle model control interface is entered, and the final 3D vehicle model is displayed on the vehicle model control interface, so that the user can view the final 3D vehicle model of the vehicle at any time from the vehicle model control interface of a vehicle-mounted display screen, to improve user experience.

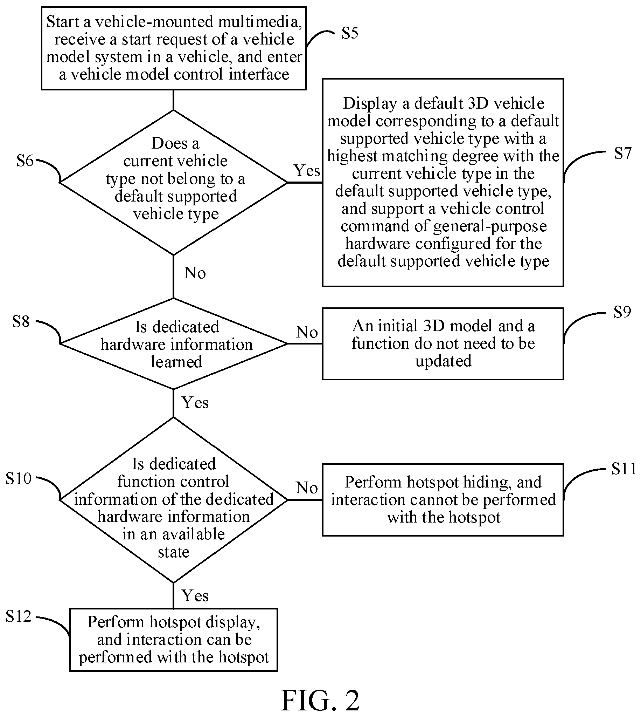

The method for creating a vehicle model in an embodiment of the present disclosure is described below by using an example with reference to FIG. 2. The method includes at least step S5 to step S12.

Step S5: A vehicle-mounted multimedia is started, a start request of a vehicle model system in a vehicle is received, and a vehicle model control interface is entered.

Step S6: The vehicle model system determines whether a current vehicle type does not belong to a default supported vehicle type, and if the current vehicle type does not belong to the default supported vehicle type, step S7 is performed, or if the current vehicle type belongs to the default supported vehicle type, step S8 is performed.

Step S7: A default 3D vehicle model corresponding to a default supported vehicle type with a highest matching degree with the current vehicle type in the default supported vehicle type is displayed, and a vehicle control instruction of general-purpose hardware configured for the default supported vehicle type is supported.

Step S8: It is determined whether the vehicle model system learns dedicated hardware information, and if the vehicle model system learns the dedicated hardware information, step S10 is performed, or if the vehicle model system does not learn the dedicated hardware information, step S9 is performed.

Step S9: An initial 3D vehicle model and a function do not need to be updated.

Step S10: The vehicle model system determines whether dedicated function control information of the dedicated hardware information is in an available state, that is, whether dedicated hardware has a corresponding vehicle control function. If the dedicated function control information is in an unavailable state, step S11 is performed. If the dedicated function control information is in the available state, step S12 is performed.

Step S11: Hotspot hiding on a dedicated hardware hotspot or a general-purpose hardware hotspot is controlled, and interaction cannot be performed with the dedicated hardware hotspot or the general-purpose hardware hotspot.

Step S12: Hotspot display on the dedicated hardware hotspot or the general-purpose hardware hotspot is controlled, and interaction can be performed with the dedicated hardware hotspot or the general-purpose hardware hotspot.

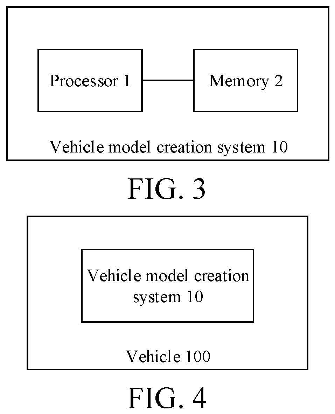

According to a second aspect, an embodiment of the present disclosure provides a vehicle model creation system 10. As shown in FIG. 3, the vehicle model creation system 10 includes one or more processors 1 and a memory 2 communicatively connected to at least one processor 1.

The memory 2 stores a computer program executable by the at least one processor 1, and when the at least one processor 1 executes the computer program, the method for creating a vehicle model in the foregoing embodiment is implemented.

It should be noted that a specific implementation of the vehicle model creation system 10 in this embodiment of the present disclosure is similar to a specific implementation of the method for creating a vehicle model in any of the foregoing embodiments of the present disclosure. For details, refer to the descriptions of the method. To reduce redundancy, details are not described herein again.

According to the vehicle model creation system 10 in this embodiment of the present disclosure, a function of dedicated hardware can be upgraded through self-learning, so that a created 3D vehicle model is more consistent with an actual state of an actual vehicle, development costs and update costs can be reduced.

According to a third aspect, an embodiment of the present disclosure provides a computer storage medium. The computer storage medium stores a computer program. When the computer program is executed by a processor, the method for creating a vehicle model is implemented.

According to a fourth aspect, an embodiment of the present disclosure provides a vehicle 100. As shown in FIG. 4, the vehicle 100 includes the vehicle model creation system 10.

According to the vehicle 100 in this embodiment of the present disclosure, a function of dedicated hardware can be upgraded through self-learning, so that a created 3D vehicle model is more consistent with an actual state of an actual vehicle, and development costs and update costs can be reduced.

In the descriptions of this specification, descriptions of any process or method in the flowchart or described herein in another manner can be construed as representing one or more modules, fragments, or parts that include code of executable instructions used to implement a specific logical function or steps of a process. In addition, the scope of the exemplary implementations of the present disclosure includes another implementation, where functions can be performed not in an order shown or discussed, including performing the functions basically at the same time or in reverse order according to the functions involved. This should be understood by a person skilled in the technical field to which the embodiments of the present disclosure belong.

The logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit a program for use by an instruction execution system, apparatus, or device or in combination with the instruction execution system, apparatus, or device. More specific examples (a non-exhaustive list) of the computer-readable medium include the following: an electrical connection part (an electronic apparatus) with one or more wires, a portable computer diskette (a magnetic apparatus), a random access memory (RAM), a read-only memory (ROM), an erasable programmable read-only memory (EPROM or a flash memory), an optical fiber apparatus, and a portable compact disk read-only memory (CDROM). In addition, the computer-readable medium may even be paper or another suitable medium on which the program can be printed, because the program can be obtained electronically, for example, by optically scanning the paper or another medium, then editing, interpreting, or processing in another suitable manner if necessary, and then storing the program in a computer memory.

It should be understood that, parts of the present disclosure can be implemented by using hardware, software, firmware, or a combination thereof. In the foregoing implementations, a plurality of steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit of a logic gate circuit for realizing a logic function for a data signal, an application specific integrated circuit having a suitable combined logic gate circuit, a programmable gate array (PGA), and a field programmable gate array (FPGA).

A person of ordinary skill in the art may understand that all or some of the steps of the methods in the foregoing embodiments may be implemented by a program instructing relevant hardware. The program may be stored in a computer-readable storage medium. When the program is executed, one or a combination of the steps of the method embodiments are performed.

In addition, in functional units according to the embodiments of the present disclosure may be integrated in one processing module or exist as separate physical units, or two or more units are integrated into one module. The foregoing integrated module may be implemented in a form of hardware, or may be implemented in a form of software function modules. If implemented in the form of the software function modules and sold or used as an independent product, the integrated module may also be stored in a computer-readable storage medium.

The storage medium mentioned above may be a read-only memory, a disk, an optical disc, or the like. Although the embodiments of the present disclosure have been shown and described above, it may be understood that, the foregoing embodiments are exemplary and should not be understood as limitation to the present disclosure. A person of ordinary skill in the art may make changes, modifications, replacements, or variations to the foregoing embodiments within the scope of the present disclosure.

In the descriptions of this specification, reference to the descriptions of the terms "an embodiment", "some embodiments", "exemplary embodiments", "an example", "a specific example", "some examples", or the like means that a specific feature, structure, material, or characteristic described with reference to this embodiment or example is included in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art may understand that: various changes, modifications, replacements, and variations may be made to the embodiments without departing from the principle and spirit of the present disclosure, and the scope of the present disclosure is as defined by the claims and equivalents thereof.

## Claims

1. A method for creating a vehicle model, comprising:
receiving (S1) a start request of a vehicle model system;
obtaining (S2) a current vehicle type and dedicated hardware information of a vehicle;
creating (S3) an initial 3D vehicle model according to the current vehicle type and a default supported vehicle type of the vehicle model system; and
updating (S4) the initial 3D vehicle model according to the dedicated hardware information, to create a final 3D vehicle model.

2. The method for creating a vehicle model according to claim 1, wherein a default 3D vehicle model corresponding to the default supported vehicle type is pre-stored in the vehicle model system, and creating (S3) the initial 3D vehicle model according to the current vehicle type and the default supported vehicle type of the vehicle model system comprises:
when it is determined that the current vehicle type belongs to the default supported vehicle type, configuring a default 3D vehicle model corresponding to the current vehicle type as the initial 3D vehicle model; and
when it is determined that the current vehicle type does not belong to the default supported vehicle type, determining, from the default supported vehicle type, a default supported vehicle type with a highest matching degree with the current vehicle type, and configuring a default 3D vehicle model corresponding to the default supported vehicle type with the highest matching degree as the initial 3D vehicle model.

3. The method for creating a vehicle model according to claim 1 or 2, wherein the dedicated hardware information comprises dedicated configuration information and dedicated function control information, and updating (S4) the initial 3D vehicle model according to the dedicated hardware information comprises:
determining a dedicated hardware sub-model according to the dedicated configuration information;
updating general-purpose hardware that corresponds to the dedicated hardware and that is in the initial 3D vehicle model to the dedicated hardware sub-model, and synchronously updating the dedicated function control information into the initial 3D vehicle model; and
controlling general-purpose hardware in the initial 3D vehicle model other than the general-purpose hardware corresponding to the dedicated hardware to maintain own configuration information and own function control information.

4. The method for creating a vehicle model according to claim 3, wherein the dedicated configuration information comprises at least accessory information, accessory connection information, and arrangement position information of the dedicated hardware, and the dedicated function control information comprises a basic function control parameter and a value-added function control parameter of the dedicated hardware.

5. The method for creating a vehicle model according to claim 3 or 4, further comprising:
determining whether the dedicated function control information or own function control information is in an available state;
if the dedicated function control information or own function control information is in the available state, controlling hotspot display on a dedicated hardware hotspot or a general-purpose hardware hotspot in the final 3D vehicle model; and
if the dedicated function control information or own function control information is not in the available state, controlling hotspot hiding on the dedicated hardware hotspot or the general-purpose hardware hotspot in the final 3D vehicle model.

6. The method for creating a vehicle model according to claim 5, after hotspot display is performed on the dedicated hardware hotspot or the general-purpose hardware hotspot, further comprising:
receiving a first control instruction of the dedicated hardware hotspot or the general-purpose hardware hotspot; and
changing, in response to the first control instruction, an operating status of the dedicated hardware or the general-purpose hardware according to the dedicated function control information or own function control information.

7. The method for creating a vehicle model according to claim 6, further comprising:
controlling a hotspot interaction form between the dedicated hardware hotspot and the dedicated hardware according to a vehicle control interaction effect of the dedicated hardware; and
controlling a hotspot interaction form between the general-purpose hardware hotspot and the general-purpose hardware according to a vehicle control interaction effect of the general-purpose hardware.

8. The method for creating a vehicle model according to claim 7, wherein the hotspot interaction form comprises at least one of a hotspot following form, a hotspot rotation form, and a hotspot fixing form.

9. The method for creating a vehicle model according to any one of claims 1 to 8, further comprising:
receiving an enabling instruction of a vehicle model DIY function in the vehicle model system, and entering a vehicle model DIY editing interface;
obtaining a DIY editing element of the vehicle model DIY function, and loading the DIY editing element into the vehicle model DIY editing interface; and
adjusting the final 3D vehicle model in a customized manner according to the DIY editing element.

10. The method for creating a vehicle model according to claim 8 or 9, wherein the DIY editing element comprises at least a vehicle body decoration editing element and a vehicle hardware editing element, and adjusting the final 3D vehicle model in the customized manner according to the DIY editing element comprises:
adjusting a vehicle body of the final 3D vehicle model in a customized manner according to the vehicle body decoration editing element; and/or
adjusting dedicated hardware or general-purpose hardware in the final 3D vehicle model in a customized manner according to the vehicle hardware editing element.

11. The method for creating a vehicle model according to any one of claims 1 to 10, after receiving the start request of the vehicle model system, further comprising:
entering a vehicle model control interface, and displaying the final 3D vehicle model on the vehicle model control interface.

12. The method for creating a vehicle model according to any one of claims 1 to 11, wherein the obtaining a current vehicle type of a vehicle comprises:
obtaining the current vehicle type corresponding to the vehicle according to a vehicle type ID value corresponding to the vehicle.

13. A vehicle model creation system (10), comprising:
at least one processor (1); and
a memory (2) communicatively connected to the at least one processor (1),
wherein the memory (2) stores a computer program executable by the at least one processor (1), and when the at least one processor (1) executes the computer program, the method for creating a vehicle model according to any one of claims 1 to 12 is implemented.

14. A computer storage medium, storing a computer program, when the computer program being executed by a processor, the method for creating a vehicle model according to any one of claims 1 to 12 being implemented.

15. A vehicle (100), comprising the vehicle model creation system (10) according to claim 13.
